# EUROPÄISCHE PATENTSCHRIFT

(11) **EP 2 092 033 B1**
(45) Veröffentlichungstag und Bekanntmachung des Hinweises auf die Patenterteilung: **16.11.2011**
(21) Anmeldenummer: 07820180.3
(22) Anmeldetag: 13.09.2007
(51) Int. Cl.: C09J 153/02, C09J 123/02, C09J 123/08

(54) **SCHMELZHAFKLEBSTOFFE MIT EINER HAFTUNG ZU FLEXIBLEN SUBSTRATEN**
PRESSURE-SENSITIVE HOT-MELT ADHESIVES ADHERING TO FLEXIBLE SUBSTRATES
AUTO-ADHÉSIFS FONDUS PRÉSENTANT UNE ADHÉRENCE AVEC DES SUBSTRATS FLEXIBLES

(30) Priorität: 15.11.2006 DE 102006054196
(43) Veröffentlichungstag der Anmeldung: 26.08.2009
(73) Patentinhaber: Henkel AG & Co. KGaA, 40589 Düsseldorf (DE)
(72) Erfinder: TÖNNIESSEN, Holger, 52382 Niederzier (DE); SEILER, Annie, 40225 Düsseldorf (DE); RAUBERGER, Rainer, 40597 Düsseldorf (DE); GRAUEL, Ralf, 40724 Hilden (DE)
(86) Internationale Anmeldenummer: PCT/EP2007/059627
(87) Internationale Veröffentlichungsnummer: WO 2008/058781

(56) Entgegenhaltungen:
- EP-A- 0 413 137
- WO-A-2006/066127
- WO-A-2006/107763
- JP-A- 62 007 776
- US-A- 4 394 915
- US-A- 5 741 840
- US-A- 5 939 483
- US-A- 6 034 159

## Beschreibung

Die Erfindung betrifft Schmelzhaftklebstoffe sowie deren Herstellung und Verwendung. Diese sollen eine gute Haftung zu flexiblen Substraten aufweisen und eine optisch einwandfreie Verklebung von Kunststofffolien auf Kartonagen ermöglichen.

Unter Schmelzhaftklebstoffen (hotmelts) werden im allgemeinen bei Raumtemperatur feste, wasser- und lösemittelfreie Klebstoffe verstanden, die auf die zu verklebenden Teile aus der Schmelze aufgetragen werden und nach dem Zusammenfügen beim Abkühlen unter Verfestigung physikalisch abbinden. Solche Schmelzhaftklebstoffe (PSA, pressure sensitive adhesives) bleiben beim Abkühlen permanent klebrig und klebfähig und haften bei leichtem Anpressdruck sofort auf fast allen Substraten.

Schmelzhaftklebstoffe finden eine breite industrielle Verwendung und werden beispielsweise in der Getränkeindustrie und der Verpackungsindustrie zur Etikettierung, zum Anheften von Tränsporttaschen oder zum vorübergehenden Befestigen von Wegwerfartikeln eingesetzt.

Typische Schmelzhaftklebstoffe setzen sich aus Basis-Polymeren, klebrigmachenden Harzen, gegebenenfalls Weichmacher-Ölen sowie ggf. Additiven zusammen. Häufig eingesetzte Basis-Polymere sind Styrol-Copolymere, beispielsweise Styrol-Isopren-Styrol (SIS)- , Styrol-Butadien-Styrol (SBS)- , Styrol-Ethylen-Butylen-Styrol (SEBS)-, Block-Copolymere oder amorphe Poly-α-olefine (APAO).

Schmelzhaftklebstoffe auf Basis von beispielsweise Styrol-Isopren-Styrol-BlockCopolymeren sind aus der EP 0451 920 B1 bekannt. Die beschriebenen Zusammensetzungen enthalten übliche Tackifier (Klebrigharze), Weichmacheröle sowie übliche Additive. Eine spezielle Kombination mit anderen Polymeren ist nicht beschrieben.

US 5,459,193 beschreibt einen Schmelzklebstoff für Haftklebstoff-Formulierungen im Textil- und Non-woven Bereich. Diese Zusammensetzung basiert auf speziellen Styrolblockcopolymeren. Allerdings weist eine solche Zusammensetzung eine unbefriedigende Anfangshaftung auf. Bei einer Substitution eines Teiles oder der Gesamtheit des SEBS-Polymers durch ein SIS- und/oder SBS-Polymer lässt sich zwar die Anfangehaftung erhöhen, gleichzeitig wird aber die Kohäsion reduziert.

Als Nachteil der bekannten Schmelzhaftklebstoffe ist häufig festzustellen, dass bei Verkleben von Substraten aus Kunststoff die Weichmacheröle dazu neigen, in das Substrat zu migrieren. Bei folienförmigen Substraten, die auf festen Unterlagen verklebt sind, kann das dazu führen, dass die Folie nach einiger Zeit Falten oder Wellen aufwirft. Das stört das Aussehen solche Verklebungen. Weiterhin sind solche Styrolblockcopolymere teuer. Es sind zwar andere billigere Basispolymere bekannt, diese sind aber häufig nicht verträglich und als Haftklebstoff weniger geeignet. Gerade dann müssen zur Erzielung der Haftklebeigenschaften höhere Anteile an Weichmacherölen eingesetzt werden.

Ausgehend von diesem Stand der Technik ergab sich die Aufgabe, kostengünstige Schmelzhaftklebstoffe mit verbesserten Verarbeitungs- und Gebrauchseigenschaften bereitzustellen, die über hohe Anfangshaftung der Verklebung verfügen. Weiterhin soll eine gute Adhäsion, insbesondere zu Substraten aus Kunststoff, gewährleistet sein. Zusätzliche, für die Verarbeitung der Schmelzhaftklebstoffe wichtige Eigenschaften, sollen zumindest beibehalten werden. Ein Aufwerfen von Falten in verklebten folienförmigen Substraten soll vermieden werden.

Die erfindungsgemäße Lösung dieser Aufgabe ist den Patentansprüchen zu entnehmen. Sie besteht im Wesentlichen in einem Schmelzhaftklebstoff enthaltend

| | |
|---|---|
| 1 bis 30 Gew.-% | mindestens eines Ethylen-Vinylacetat-Copolymeren mit einem Schmelzpunkt oberhalb von 70°C. |
| 2 bis 50 Gew.% | mindestens eines Gemisches von Styrolblockcopolymeren, ausgewählt aus SIS oder SBS-Polymeren zusammen mit SIBS-Polymeren, |
| 20 bis 70 Gew.-% | eines klebrigmachenden Harzes, sowie |
| 5 bis 40 Gew.-% | mindestens eines Weichmachers |

sowie ggf. Additive, wobei die Summe der Bestandteile 100 % betragen soll.

Schmelzhaftklebstoffe enthalten im Allgemeinen als eine Klebstoffkomponente Elastomere, insbesondere thermoplastischen Elastomere. Diese haben eine Glasübergangstemperatur T_{g} von meist unter 0°C. Beispiele für solche Polymere sind Acrylat-, Polyester-Urethan-, Ethylen-Acrylat-, Butyl-Kautschuk; Naturkautschuk; Ethylen-Propylen-Copolymere oder Styrol-Copolymere einzeln oder in Mischung, wobei es sich bei den Copolymeren um statistische, alternierende, Pfopf- oder Block-Copolymere handelt. Es werden für eine erfindungsgemäße Zusammensetzung als eine Komponente thermoplastischen Elastomere ausgewählt aus der Gruppe der Styrolblockcopolymeren, beispielsweise Styrol- und Styrol-Butadien-Copolymere (SBS, SBR), Styrol-Isopren-Copolymere (SIS), Styrol-Ethylen/Butylen-Copolymere (SEBS), Styrol-Ethylen/Propylen-Styrol-Copolymere (SEPS) oder Styrol-Isopren-Butylen-Copolymere (SIBS). Solche Produkte sind dem Fachmann bekannt und kommerziell erhältlich.

Die Menge der Styrolblockcopolymere soll zwischen 5 bis 50 Gew.-% des Schmelzhaftklebstoffs betragen. In dem Schmelzklebstoff sollen Gemische von SBS oder SIS-Polymeren mit SIBS-Polymeren enthalten sein. Diese Polymere zeigen eine gute Verträglichkeit miteinander. In einer Ausführungsform soll das Mengenverhältnis von SIBS zu Styrolblockcopolymeren 1: 10 bis 2:1 bezogen auf die Summe der Styrolblockcopolymeren sein, insbesondere zwischen 1:5 bis 1:1.

Als weitere erfindungsgemäß notwendige Komponente sind Ethylen-Vinylacetat-Copolymere (EVA) enthalten. Solche Copolymere sind dem Fachmann bekannt. Es handelt sich dabei um Polymere mit einem Vinylacetatgehalt von 10 bis 40 mol-% bezogen auf die Summe der Monomeren. Ggf. können noch weitere Comonomere enthalten sein. Solche Polymere sind üblicherweise kristallin oder teilkristallin. Diese weisen einen Schmelzpunkt von über 70°C auf (gemessen mit DSC). Die Menge der EVA-Polymere soll 1 bis 30 Gew.-% betragen. Das Verhältnis zwischen EVA : Styrolblockcopolymeren soll zwischen 1 : 50 bis 3 : 1 betragen, insbesondere 1 : 20 bis 1 : 1. Wird die Menge des EVA erhöht ist es möglich, dass die Haftung in der Kälte negativ beeinflusst wird.

Als weiteren Bestandteil enthält der erfindungsgemäße Schmelzhaftklebstoff mindestens ein klebrigmachendes Harz. Das Harz bewirkt eine zusätzliche Klebrigkeit. Es wird in einer Menge von 20 bis 70 Gew.-%, bevorzugt 30 bis 60 Gew.-%, eingesetzt. Es handelt sich dabei insbesondere um Harze, die einen Erweichungspunkt von 70 bis 130 °C (Ring-Ball-Methode, DIN 52011) besitzen. Es sind dieses beispielsweise aromatische, aliphatische oder cycloaliphatische Kohlenwasserstoff-Harze, sowie modifizierte oder hydrierte Versionen davon. Konkrete Beispiele sind: aliphatische oder alicyclische Petroleum-Kohlenwasserstoffharze und hydrierte Derivate davon. Weitere, im Rahmen der Erfindung einsetzbare Harze sind z.B. Hydroabietylalkohol und seine Ester, insbesondere Ester mit aromatischen Carbonsäuren wie Terephthalsäure und Phthalsäure; modifizierte Naturharze wie Harzsäuren aus Balsamharz, Tallharz oder Wurzelharz, z.B. vollverseiftes Balsamharz; Alkylester von gegebenenfalls teilhydriertem Kolophonium mit niedrigen Erweichungspunkten wie z.B. Methyl-, Diethylenglykol-, Glycerin- und Pentaerythrit-Ester ; Terpen-Harze, insbesondere Terpolymere oder Copolymere des Terpens, wie Styrol-Terpene, α-Methyl-Styrol-Terpene, Phenol-modifizierte Terpenharze sowie hydrierte Derivate davon; Acrylsäure-Copolymerisate, vorzugsweise Styrol-Acrylsäure-Copolymere und Harze auf Basis funktioneller Kohlenwasserstoffharze.

Bevorzugt ist es, partiell polymerisierte Tallharze, hydrierte Kohlenwasserstoff-harze oder Kolophoniumharzester einzusetzen. Die Menge soll insbesondere 20 bis 60 Gew.-% betragen.

Weiterhin muss eine erfindungsgemäße Zusammensetzung mindestens einen Weichmacher enthalten. Der Weichmacher wird zum Einstellen der Viskosität verwendet, soll eine verbesserte Verarbeitbarkeit ermöglichen und ggf. die Klebrigkeit der Mischung erhöhen. Die Viskosität der Weichmacher soll zwischen 10 bis 1500 mPas bei 25°C betragen, insbesondere zwischen 100 bis 600 mPas (gemessen nach DIN 1342). Er ist in dem erfindungsgemäßen Schmelzhaftklebstoff im Allgemeinen in einer Konzentration von 5 bis 40 Gew.-%, vorzugsweise in einer Menge von 10 bis 30 Gew.-%, enthalten.

Geeignete Weichmacher sind medizinische Weißöle, naphtenische Mineralöle, Adipate, Polypropylen-, Polybuten-, Polyisopren-Oligomere, hydrierte Polyisopren-und/oder Polybutadien-Oligomere, Benzoatester, pflanzliche oder tierische Öle und deren Derivate, Sulfonsäureester, ein- oder mehrwertige Alkohole, Polyalkylenglykole mit einer Molmasse von 200 bis 6 000 g/mol, wie Polypropylenglykol oder Polybutylenglykol.

Insbesondere werden ölartige Weichmacherkomponenten eingesetzt. Bevorzugt ist die Weichmacher-Komponente bei Raumtemperatur eine Flüssigkeit, beispielsweise Kohlenwasserstoff-Öle, Polybuten/Polyisopren-Oligomere, hydrierten naphtenischen Öle oder Pflanzenöle.

In einer bevorzugten Ausführungsform der Erfindung sind anteilsweise Ester als Weichmacher enthalten zusätzlich zu den ölartigen Weichmachern. Es handelt sich dabei beispielsweise um flüssige Polyester und Glycerinester, wie Glycerindiacetat und Glycerintriacetat, Glycerintribenzoat, Neopentylglykol-dibenzoat, Pentaerythritoltetrabenzoat und 1,4-Cyclohexan-dimethanoldibenzoat. Bevorzugt werden Weichmacher auf Basis aromatischer Dicarbonsäureester eingesetzt, zum Beispiel Di-Ester der Phthalsäure, Isophthalsäure oder Terephthalsäure. Der Alkoholrest in diesen als Weichmacher eingesetzten Estern weist üblicherweise 2 bis 20 C-Atome auf. Beispiele für solche Ester sind Diallyphthalat, Dibutylphthalat, Dicyclohexyl- Dimethylcyclohexyl-, Disioheptyl-, Diethylhexyl- Dioctyl-, Diisononyl-, Diisodecylphthalat. Insbesondere sollen diese Weichmacher einen hohen Siedepunkt aufweisen, beispielsweise bei Normaldruck oberhalb von 250 °C. Besonders geeignet sind Phthalsäureester von Alkoholen mit 8 bis 16 C-Atomen.

Die Menge der Weichmacher auf Esterbasis soll zwischen 2 bis 35 % betragen, insbesondere zwischen 5 bis zu 25 Gew.-%.

Gegebenenfalls können dem Schmelzhaftklebstoff Wachse in geringen Mengen zugegeben werden. Die Menge ist dabei so bemessen, dass die Adhäsion nicht negativ beeinflusst wird. Das Wachs kann natürlichen, chemisch modifizierten oder synthetischen Ursprungs sein. Die menge soll unter 10 % betragen. Darüber hinaus können dem erfindungsgemäßen Schmelzhaftklebstoff übliche Hilfs- und Zusatzstoffe beigefügt werden. Beispiele dafür sind Stabilisatoren, Antioxidantien, wie sterisch gehinderte Phenole, Phospite oder Thioester, Farbstoffe wie Titandioxid, Füllstoffe wie Talcum, Ton, oder Haftvermittler. Solche Additive oder Zusatzstoffe werden üblicherweise in Mengen bis zu 5 Gew.-%, vorzugsweise in Mengen von etwa 3 Gew.-% dem Schmelzhaftklebstoff beigefügt. Solche Additive sind dem Fachmann bekannt.

Der erfindungsgemäße Schmelzhaftklebstoff wird durch bekannte Verfahren hergestellt. Beispielsweise können ggf. Weichmacher, Wachse und Harze bei 120°C bis 180°C zu einer homogenen Schmelze vorgemischt werden. Nach der Zugabe von Hilfs- und Zusatzstoffen werden dann die polymeren Komponenten zugefügt und homogenisiert. Es sind auch kontinuierliche Herstellungsweisen möglich, beispielsweise in einem Extruder.

Durch den erfindungsgemäßen Schmelzhaftklebstoff werden kostengünstige Haftklebstoffe erhalten, die die Anforderungen an Soforthaftung, Wärmestandfestigkeit, Applikationsverhalten und Wiederablösbarkeit erfüllen. Eine Verträglichkeit der Komponenten ist gegeben, die verschiedenen Substratmaterialien werden nicht negativ beeinträchtigt. Die erfindungsgemäßen Schmelzhaftklebstoffe weisen auch in der Kälte eine gute Haftung auf. Auch Anteile an härteren Polymeren wie EVA können in den erfindungsgemäßen Zusammensetzungen als dauerhaftklebrige Klebstoffe eingesetzt werden.

Die erfindungsgemäßen Schmelzhaftklebstoffe werden zum Verkleben von Substraten wie Glas, Metall, lackiertes oder unlackiertes Papier, Kartonagen und Kunststoffe, wie z.B. PET, PEN, PP, PVC und PS verwendet. Auf solche festen Substrate werden dann dünne flexible Substrate geklebt, beispielsweise aus Folien, Mehrschichtfolien oder Papier. Dabei handelt es sich beispielsweise um Etiketten, Umverpackungen, Taschen usw. Diese können beispielsweise aus Kunststoffen hergestellt sein, z.B. aus Polyethylen, Polypropylen, Polystyrol, Polyvinylchlorid oder Zellglas, insbesondere aus PE-Folien. Weiterhin können die Etiketten aber auch auf Papier basieren, gegebenenfalls in Kombination mit Polymerfilmen. Die erfindungsgemäßen Schmelzhaftklebstoffe zeichnen sich insbesondere durch eine sehr gute Adhäsion auf den vorgenannten Kunststoffen aus, dabei können diese auch von den Substratoberflächen wieder entfernt werden.

Eine weitere Verwendung ist das Verkleben von zwei flexiblen Foliensubstraten miteinander. Dabei werden die beiden Substratteile reversibel miteinander verklebt, d.h. beispielsweise können Taschen aus Folie wiederverschließbar verklebt werden. Diese Klebebindung ist auch in der Kälte stabil und mehrfach zu verschließen.

Eine erfindungsgemäße Anwendung ist das Verkleben von Folientaschen und kältestabiles Verkleben von Security bags auf Basis von Polyolefinen. Dabei wird eine Oberfläche der Folie mit einem erfindungsgemäßen Schmelzhaftklebstoff beschichtet und dann auf das Substrat, beispielsweise eine Kartonage verklebt. Auch nach Lagerung bei erhöhter Temperatur ist eine gute Verklebung des Verbundes festzustellen, die Wärmestandfestigkeit ist gut. Dabei verändert sich die verklebte Folie nicht, d.h. es bilden sich keine Blasen, Falten oder andere optisch auffallende Fehlstellen. Auch das Tieftemperaturhaftvermögen solcher Klebstoffe ist sehr gut.

### Beispiel 1:

Es wird eine Mischung hergestellt aus:
10 g EVA Polymeren (Evatane 28-05)
17 g SBS-Polymeren (Europrene Sol 1205)
55 g Harz (Sylvalite RE 105S)
1 g Stabilisator (Irganox 1010)
8 g Weichmacheröl (Primol 352)
9 g DINP (Vestinol 9)

### Beispiel 2:

Es wird eine Mischung hergestellt aus:
10 g EVA Polymeren (Evatane 28-05)
17 g SBS-Polymeren (Europrene Sol 1205)
10 g SIBS (Kraton MD-6455)
41 g Harz (Sylvalite RE 105S)
1 g Stabilisator (Irganox 1010)
13 g Weichmacheröl (Primol 352)
10 g DINP (Jayflex DINP)

Beispiel 3:

Es wird eine Mischung hergestellt aus:
10 g EVA Polymeren (Evatane 28-05)
17 g SBS-Polymeren (Europrene Sol 1205)
5 g SIBS (Kraton MD-6455)
44 g Harz (Sylvalite RE 105S)
1 g Stabilisator (Irganox 1010)
3 g Weichmacheröl (Primol 352)
20 g DINP (Jayflex DINP)

### Vergleichsbeispiel 1:

Es wird eine Mischung hergestellt aus:
20 g EVA Polymeren (Evatane 28-05)
14 g SBS-Polymeren (Europrene Sol 1205)
40 g Harz (Sylvares ZT 105 LT)
1 g Stabilisator (Irganox 1010)
25 g Weichmacheröl (Nyflex 222B)

Bei 180°C werden in einem Labor-Rührer die Polymeren aufgeschmolzen und gemischt. Dann werden die weiteren Rezepturbestandteile zugegeben und vollständig homogenisiert. Die geschmolzene Mischung wird abgefüllt und dann abgekühlt, wobei sie erstarrt.

Der Schmelzklebstoff wird mit einem beheizbaren Rakel mit einer Schicht von 18 g/m² auf eine handelsübliche Folie aus OPP und eine weitere Folie aus PE aufgetragen. Die Folien werden auf einem Karton geklebt. Beim Abziehen wird eine Klebkraft von 11 N/25mm erhalten.

Eine beschichtete PE- Folie wird auf eine feste Kartonunterlage geklebt. Die Probe wird 4 Tage bei 40 °C gelagert. Es sind Falten und Aufquellung der Folie zu beobachten im Fall des Vergleichsversuchs, sonst bleibt die Folie glatt verklebt.

## Patentansprüche

1. Schmelzhaftklebstoff zum Verkleben von Kunstofffolien enthaltend
- 1 bis 30 Gew.-% mindestens eines Ethylen-Vinylacetat-Copolymeren mit einem Schmelzpunkt oberhalb von 70°C,
- 2 bis 50 Gew.-% mindestens eines Gemisches von Styrolblockcopolymeren, ausgewählt aus SIS oder SBS-Polymeren zusammen mit SIBS-Polymeren,
- 20 bis 70 Gew.-% eines klebrigmachenden Harzes
- 5 bis 40 Gew.-% mindestens eines Weichmachers,
sowie ggf. weitere Additive.

2. Schmelzhaftklebstoff nach Anspruch 1, **dadurch gekennzeichnet, dass** der Weichmacher ein Gemisch aus mindestens einem Öl, ausgewählt aus medizinischen Weißölen, naphthenischen Ölen, ggf. hydrierten Polybuten- oder Isoprenoligomeren, Adipinsäureestern und mindestens einem Phthalsäureester umfasst.

3. Schmelzhaftklebstoff nach Anspruch 1 oder 2, **dadurch gekennzeichnet, dass** der Phthalatsäureester eine Siedepunkt oberhalb von 250 °C aufweist.

4. Schmelzhaftklebstoff nach einem der Ansprüche 1 bis 3, **dadurch gekennzeichnet, dass** das Ethylen-Vinylacetat-Copolymere 10 mol-% bis 30 mol-% Vinylacetateinheiten enthält.

5. Schmelzhaftklebstoff nach einem der Ansprüche 1 bis 4, **dadurch gekennzeichnet, dass** das Verhältnis des Ethylen-Vinylacetat-Copolymere zu dem die Styrolblockcopolymere 1 : 50 bis 3 : 1 beträgt.

6. Schmelzhaftklebstoff nach Anspruch 5, **dadurch gekennzeichnet**, das das Verhältnis 1 : 20 bis 1 : 1 beträgt.

7. Schmelzhaftklebstoff nach Anspruch 1 bis 6, **dadurch gekennzeichnet, dass** ein Gemisch aus Styrol-Isopren-Butylen-Copolymer mit einem weiteren Styrolblockcopolymeren enthalten ist in einer Menge 1 : 10 bis 2 : 1 SIBS : Styrolblockcopolymer.

8. Verwendung eines Schmelzhaftklebstoffes nach einem der Ansprüche 1 bis 7 zum Verkleben von Etiketten, Folien oder anderen flächigen Substraten.

9. Verwendung nach Anspruch 8 zum Verkleben von Kunststoffsubstraten auf Kartonagen, insbesondere von Polyethylensubstraten in Folienform.

10. verwendung nach Anspruch 8 zum wiederverschließbaren Verkleben von folienförmigen Substraten aufeinander.

11. Verbundmaterial aus flächigem, dünnem, blatt- oder folienförmigen Substrat und einem weiteren festem Substrat, wobei die beiden Substrate mit einem Schmelzhaftklebstoff nach einem der Ansprüche 1 bis 7 verklebt sind.

12. Verbundmaterial nach Anspruch 10, **dadurch gekennzeichnet, dass** als Substrat eine Kunststofffolie, insbesondere eine Polyethylen-Folie verklebt wurde.

## Claims

1. A hot melt pressure sensitive adhesive for gluing plastic films comprising
- 1 to 30 wt.% of at least one ethylene-vinyl acetate copolymer with a melting point above 70 °C,
- 2 to 50 wt.% of at least one mixture of styrene block copolymers, selected from SIS or SBS polymers together with SIBS polymers,
- 20 to 70 wt.% of a tackifying resin
- 5 to 40 wt.% of at least one plasticiser,
as well as optional additional additives.

2. The hot melt pressure sensitive adhesive according to claim 1, **characterised in that** the plasticizer includes a mixture of at least one oil, selected from medicinal white oils, naphthenic oils, optionally hydrogenated oligomers of polybutene or isoprene, esters of adipic acid and at least one ester of phthalic acid.

3. The hot melt pressure sensitive adhesive according to claim 1 or 2, **characterised in that** the ester of phthalic acid has a boiling point above 250 °C.

4. The hot melt pressure sensitive adhesive according to one of claims 1 to 3, **characterised in that** the ethylene-vinyl acetate copolymer comprises 10 mol.% to 30 mol.% vinyl acetate units.

5. The hot melt pressure sensitive adhesive according to one of claims 1 to 4, **characterised in that** the ratio of the ethylene-vinyl acetate copolymer to the styrene block copolymer is 1:50 to 3:1.

6. The hot melt pressure sensitive adhesive according to claim 5, **characterised in that** the ratio is 1:20 to 1:1.

7. The hot melt pressure sensitive adhesive according to claim 1 to 6, comprising a mixture of styrene-isoprene-butene copolymer with an additional styrene block copolymer in a ratio of 1:10 to 2:1 SIBS:styrene block copolymer.

8. Use of a hot melt pressure sensitive adhesive according to one of claims 1 to 7 for gluing labels, films or other two-dimensional substrates.

9. Use according to claim 8 for gluing plastic substrates onto paperboard containers, especially polyethylene substrates in film form.

10. Use according to claim 8 for the resealable gluing of substrates in film form to one another.

11. A composite of a two-dimensional, thin substrate in the form of films or sheets and a further solid substrate, wherein both substrates are glued together with a hot melt pressure sensitive adhesive according to one of claims 1 to 7.

12. The composite according to claim 10, **characterised in that** a plastic film, in particular a polyethylene film, was glued as the substrate.

## Revendications

1. Auto-adhésif fusible pour coller des feuilles de matière plastique, contenant
- 1 à 30 % en poids d'au moins un copolymère éthylène/acétate de vinyle avec un point de fusion supérieur à 70°C,
- 2 à 50 % en poids d'au moins un mélange de copolymères séquencés du styrène choisis parmi les polymères SIS et SBS conjointement avec les polymères SIBS,
- 20 à 70 % en poids d'une résine collante,
- 5 à 40 % en poids d'au moins un plastifiant,
ainsi qu'éventuellement d'autres additifs.

2. Auto-adhésif fusible selon la revendication 1, **caractérisé en ce que** le plastifiant comprend un mélange d'au moins une huile, choisie parmi les huiles blanches médicinales, les huiles naphténiques, les oligomères de polybutène ou d'isoprène éventuellement hydrogénés, les esters d'acide adipique, et d'au moins un ester d'acide phtalique.

3. Auto-adhésif fusible selon la revendication 1 ou 2, **caractérisé en ce que** l'ester d'acide phtalique présente un point d'ébullition supérieur à 250°C.

4. Auto-adhésif fusible selon l'une des revendications 1 à 3, **caractérisé en ce que** le copolymère éthylène/acétate de vinyle contient de 10 % en moles à 30 % en moles de motifs acétate de vinyle.

5. Auto-adhésif fusible selon l'une des revendications 1 à 4, **caractérisé en ce que** la proportion du copolymère éthylène/acétate de vinyle à celle du copolymère séquencé de styrène est de 1:50 à 3:1.

6. Auto-adhésif fusible selon la revendication 5, **caractérisé en ce que** le rapport est de 1:20 à 1:1.

7. Auto-adhésif fusible selon la revendication 1 à 6, **caractérisé en ce que** le mélange de copolymère styrène/isoprène/butylène avec un autre copolymère séquencé du styrène est contenu en une quantité de 1:10 à 2:1 SIBS:copolymère séquencé du styrène.

8. Utilisation d'un auto-adhésif fusible selon l'une des revendications 1 à 7 pour coller des étiquettes, des feuilles ou d'autres substrats plans.

9. Utilisation selon la revendication 8 pour coller des substrats de matière plastique sur des cartonnages, en particulier des substrats de polyéthylène sous forme de feuilles.

10. Utilisation selon la revendication 8 pour coller de façon refermable des substrats sous forme de feuilles, l'un sur l'autre.

11. Matériau composite constitué d'un substrat plan, mince, sous forme de feuille ou feuillet et d'un autre substrat solide, les deux substrats étant collés avec un auto-adhésif fusible selon l'une des revendications 1 à 7.

12. Matériau composite selon la revendication 10, **caractérisé en ce qu'**une feuille de matière plastique, en particulier une feuille de polyéthylène a été collée en tant que substrat.
